# EUROPÄISCHE PATENTANMELDUNG

(11) **EP 3 628 434 A1**
(43) Veröffentlichungstag der Anmeldung: **01.04.2020**
(21) Anmeldenummer: 18197479.1
(22) Anmeldetag: 28.09.2018
(51) Int. Cl.: B23K 26/00, B23K 26/03, B23K 26/342, B23K 28/02, B23K 9/04, B23K 26/08

(54) **VERFAHREN ZUR ADDITIVEN FERTIGUNG UND FERTIGUNGSANLAGE**

(71) Anmelder: Siemens Aktiengesellschaft, 80333 München (DE)
(72) Erfinder: Kamps, Tobias, 80538 München (DE); Regulin, Daniel, 81825 München (DE)

(57) **Zusammenfassung**

Bei dem Verfahren zur additiven Fertigung wird in einem Verfahrensschritt ein erweichter Werkstoff herangezogen und additiv angeordnet und der additiv angeordnete Werkstoff subtraktiv bearbeitet, bevor der erweichte Werkstoff zur Erstarrung gelangt. Die Fertigungsanlage ist zur Ausführung eines solchen Verfahrens ausgebildet.

## Beschreibung

Die Erfindung betrifft ein Verfahren zur additiven Fertigung sowie eine Fertigungsanlage zur additiven Fertigung.

Im Bereich der additiven Fertigung ist es bekannt, additiv gefertigte Bauteile einer zerspanenden, d.h. subtraktiven, Nachbearbeitung zu unterziehen. Mittels einer solchen subtraktiven Nachbearbeitung sollen Toleranzen und Oberflächengüten eingehalten werden.

Das Einhalten von Toleranzen und Oberflächengüten ist auch bei auftragsbasierten additiven Fertigungsverfahren relevant, wie insbesondere dem Laserauftragsschweißen ("Laser Metal Deposition", nachfolgend auch kurz als LMD bezeichnet) oder bei Draht- und/oder lichtbogen-basierten additiven Auftragsverfahren und/oder bei Roboter- und/oder Mehrachsbasierten Auftragsverfahren. Solche additiven Fertigungsverfahren resultieren in Werkstücken, welche mit Materialien gebildet sind, die nur aufwändig zerspanbar sind. Ferner werden mit additiven Fertigungsverfahren häufig komplexe Geometrien realisiert, bei welchen eine subtraktive Nachbearbeitung schwierig ist. Eine subtraktive Nachbearbeitung ist daher häufig prozesstechnisch aufwändig und kostspielig.

Es ist daher Aufgabe der Erfindung, ein verbessertes Verfahren zur additiven Fertigung sowie eine verbesserte Fertigungsanlage zu schaffen, mittels welchen die eingangs genannten Nachteile überwunden werden können.

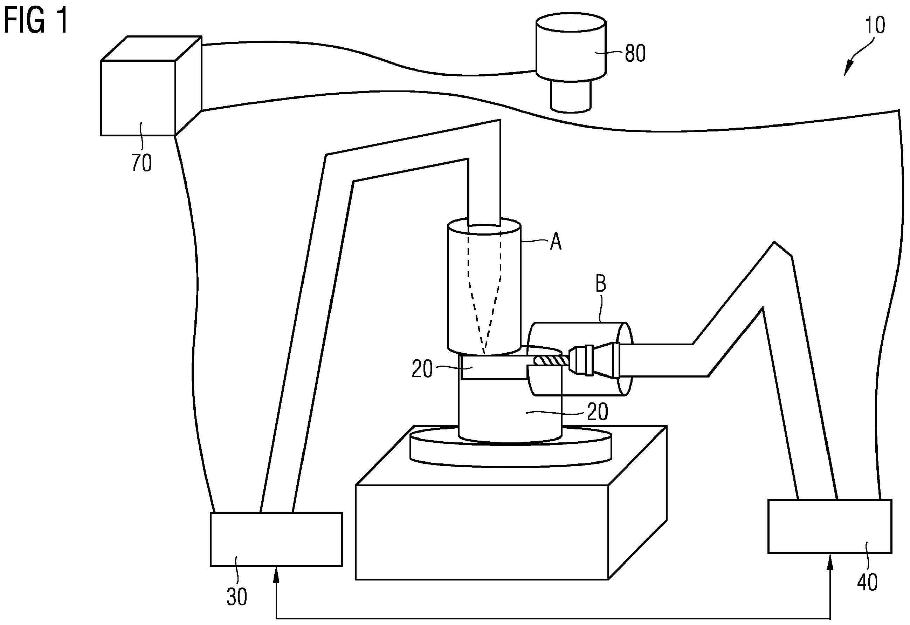

Diese Aufgabe wird mit einem Verfahren zur additiven Fertigung mit den in Anspruch 1 angegebenen Merkmalen sowie mit einer Fertigungsanlage mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur additiven Fertigung wird in einem Verfahrensschritt ein erweichter Werkstoff herangezogen und additiv zwecks additiver Fertigung angeordnet. Bei dem erfindungsgemäßen Verfahren wird der additiv angeordnete Werkstoff in dem Verfahrensschritt subtraktiv bearbeitet, bevor der erweichte Werkstoff zur Erstarrung gelangt.

Zweckmäßig wird subtraktiv bearbeitet, indem gebohrt und/oder gefräst und/oder gedreht wird.

Vorteilhafterweise wird bei dem erfindungsgemäßen Verfahren der Werkstoff folglich im noch erweichten Zustand subtraktiv bearbeitet. Im erweichten Zustand sind zur subtraktiven Bearbeitung des Werkstoffs nur reduzierte Schnittkräfte erforderlich, um Material des Werkstoffs abzutragen.

Insbesondere ist bei dem erfindungsgemäßen Verfahren ein geringerer Verschleiß der zur subtraktiven Bearbeitung erforderlichen Bearbeitungswerkzeuge bedingt. Das erfindungsgemäße Verfahren lässt sich zudem besonderes kostengünstig ausführen, da der Werkstoff nicht zusätzlich erweicht, insbesondere erwärmt, werden muss, da prozessbedingt der erweichte Zustand das Werkstoffs, der verfahrensbedingt ohnehin zur additiven Fertigung erforderlich ist, synergetisch bereits auch zur subtraktiven Bearbeitung genutzt werden kann. Insbesondere bei schwer zerspanbaren Materialien ist erfindungsgemäß somit ein geringer Werkzeugverschleiß bedingt.

Die bei dem Verfahrensschritt des erfindungsgemäßen Verfahrens vorgesehene subtraktive Bearbeitung direkt nach der additiven Anordnung erlaubt insbesondere einen nahezu simultanen Aufbau und eine Zerspanung des Werkstoffs. Damit kann eine Zerspanung komplexer, sonst schwer erreichbarer, Bauteilsegmente, insbesondere von Hinterschnitten, welche direkt beim Aufbau zerspant werden, erfolgen, bevor weiteres Material des Werkstoffs angeordnet wird. Erfindungsgemäß kann damit vermieden werden, dass aufgrund einer Anordnung von Werkstoff der Zugang für eine nachfolgende Zerspanung fehlt.

Bevorzugt gelangt bei dem erfindungsgemäßen Verfahren der erweichte Werkstoff zur Erstarrung, indem der Werkstoff abgekühlt wird. Geeigneterweise wird bei der additiven Fertigung der Werkstoff in einem heißen Zustand angeordnet, so dass der Werkstoff allein mittels Zeitablaufs ohne weitere additive Anordnung von Werkstoff zunehmend abkühlt. Sinkt die Temperatur des Werkstoffs unter die Schmelztemperaur des Werkstoffs, so gelangt der erweichte Werkstoff zur Erstarrung.

Alternativ oder zusätzlich und ebenfalls bevorzugt kann bei dem erfindungsgemäßen Verfahren der erweichte Werkstoff zur Erstarrung gelangen, indem eine Komponente des Werkstoffs evaporiert wird. Eine solche Evaporierung kann beispielsweise mittels Zeitablaufs erfolgen, etwa bei einer leicht flüchtigen Komponente des Werkstoffs.

Besonders bevorzugt wird bei dem erfindungsgemäßen Verfahren der Verfahrensschritt ein- oder mehrfach wiederholt. Auf diese Weise können die additive Fertigung und das subtraktive Bearbeiten gewissermaßen intermittierend und miteinander verzahnt erfolgen.

Zweckmäßig wird bei dem erfindungsgemäßen Verfahren der Werkstoff mittels Laserauftragsschweißens und/oder mittels Draht- und/oder Lichtbogenschweißens und/oder robotergeführt und/oder mehrachsbasiert additiv angeordnet.

Geeigneterweise wird beim erfindungsgemäßen Verfahren mittels eines ersten Roboters additiv angeordnet und mittels eines zweiten Roboters subtraktiv bearbeitet. Auf diese Weise kann mit zwei Robotern der Werkstoff flexibel additiv und subtraktiv bearbeitet werden. Zweckmäßig wird bei dem erfindungsgemäßen Verfahren mittels eines CAD/CAM-Tools für jeden der Roboter jeweils eine Bahn und ein Bearbeitungsplan festgelegt. Gelangt bei dem erfindungsgemäßen Verfahren der erweichte Werkstoff zur Erstarrung, indem er abgekühlt wird, so kann die Abkühlung des Werkstoffs mittels einer vorherbestimmten Zeitdauer oder mittels eines vorher festgelegten Modells bestimmt werden. Alternativ oder zusätzlich kann die Temperatur des Werkstoffs überwacht werden. Insbesondere wird bei dem erfindungsgemäßen Verfahren dazu ein Infrarotsensor herangezogen, welcher den Werkstoff räumlich aufgelöst erfasst und die Temperatur des Werkstoffs räumlich aufgelöst bestimmt.

Bevorzugt wird bei dem erfindungsgemäßen Verfahren eine Temperatur des additiv angeordneten Werkstoffs erfasst. Insbesondere bei einem Werkstoff, welcher infolge Abkühlung erstarrt, kann aufgrund der Temperatur des additiv angeordneten Werkstoffs zuverlässig bestimmt werden, wie viel Zeit für eine subtraktive Bearbeitung des Werkstoffs verbleibt.

Vorzugsweise wird bei dem Verfahren gemäß der Erfindung mittels eines ersten Roboters additiv angeordnet und mittels eines zweiten Roboters subtraktiv bearbeitet.

Alternativ und ebenfalls bevorzugt kann bei dem erfindungsgemäßen Verfahren mittels eines einzigen Bearbeitungskopfes additiv angeordnet und subtraktiv bearbeitet werden.

Besonders vorteilhaft wird bei dem erfindungsgemäßen Verfahren eine Bahn des Bearbeitungskopfes mit einem CAD/CAM-Tool festgelegt (CAD = "Computer-Aided Desing" and CAM = "Computer-Aided Manufacturing").

Die erfindungsgemäße Fertigungsanlage ist zur Ausführung eines erfindungsgemäßen Verfahrens wie vorhergehend beschrieben ausgebildet. Die Fertigungsanlage ist erfindungsgemäß ausgebildet, in einer Abfolge von Verfahrensschritten einen erweichten Werkstoff additiv anzuordnen und den additiv angeordneten Werkstoff subtraktiv zu bearbeiten, bevor der erweichte Werkstoff zur Erstarrung gelangt.

Nachfolgend wird die Erfindung anhand eines in der Zeichnung dargestellten Ausführungsbeispiels näher erläutert.

Die einzige Zeichnungsfigur 1 zeigt eine erfindungsgemäße Fertigungsanlage 10 zur Ausführung eines erfindungsgemäßen Verfahrens zur additiven Fertigung während einer additiven Fertigung eines Werkstücks 20.

Das Werkstück 20 bildet im dargestellten Ausführungsbeispiel einen Rotor einer elektrischen Maschine. In nicht eigens dargestellten Ausführungsbeispielen kann das Werkstück 20 auch ein sonstiges Werkstück sein.

Das Werkstück 20 wird mittels eines Auftragsroboters 30 der Fertigungsanlage 10 additiv gefertigt. Zusätzlich umfasst die Fertigungsanlage 10 einen Zerspanungsroboter 40, welcher das Werkstück 20 subtraktiv nachbearbeitet.

Der Auftragsroboter 30 fertigt im gezeigten Ausführungsbeispiel das Werkstück 20 additiv mittels Laserauftragsschweißens (LMD). In weiteren, nicht eigens dargestellten Ausführungsbeispielen wird nicht notwendig mittels Laserauftragsschweißens gefertigt, sondern alternativ oder zusätzlich mittels eines sonstigen additiven Fertigungsverfahrens gefertigt. Beispielsweise wird mittels Draht- und/oder Lichtbogenschweißens und/oder robotergeführt und/oder mehrachsbasiert additiv gefertigt.

Bei dem erfindungsgemäßen Verfahren wird mittels des Auftragsroboters 30 der Fertigungsanlage 10 in wiederholt aufeinanderfolgenden Fertigungsschritten das Werkstück 20 jeweils zunächst additiv gefertigt, wobei der bei der additiven Fertigung aufgetragene Werkstoff des Werkstücks 20 in einem gegenüber Raumtemperatur heißen Zustand, vorliegend bei einer Temperatur von zumindest 1064 Grad Celsius, befindet und im erweichten Zustand abgeschieden wird. Grundsätzlich können in weiteren Ausführungsbeispielen abhängig vom Werkstoff des Werkstücks auch andere als die genannten Temperaturen einen erweichten Zustand bedingen.

Bei dem erfindungsgemäßen Verfahren wird der erweichte Werkstoff in dem jeweiligen Fertigungsschritt, nachdem er abgeschieden worden ist und bevor der erweichte Werkstoff zur Erstarrung gelangt, subtraktiv bearbeitet, d.h. vorliegend zerspant. Dabei wird der Werkstoff derart subtraktiv bearbeitet, dass Toleranzen und Oberflächengüten, welche in einem CAD-Modell des Werkstücks 20 festgehalten sind, tatsächlich erreicht werden.

Im dargestellten Ausführungsbeispiel ist eine Steuereinrichtung 70 vorhanden, welche den Auftragsroboter 30 und einem Zerspanungsroboter 40 intermittierend ansteuert. Die Steuereinrichtung 70 steuert dabei in einer grundlegenden Variante des erfindungsgemäßen Verfahrens gerade so, dass eine Erstarrung des erweichten Werkstoffs nach einer festgelegten Zeitdauer nach dem Abscheiden vorausgesetzt wird, sodass abgeschiedener Werkstoff innerhalb dieser Zeitdauer nach dem Abscheiden subtraktiv bearbeitet wird.

Optional kann in einem weiteren Ausführungsbeispiel des erfindungsgemäßen Verfahrens die Temperatur des abgeschiedenen Werkstoffs mittels Thermographie, etwa mittels einer ortsauflösenden Infrarot- oder Wärmebildkamera 80, ein Abbild des aufgetragenen Werkstoffs erfasst werden und eine Zeitdauer abgeleitet werden, nach welcher der abgeschiedene Werkstoff erstarrt. Auf diese Weise steuert die Steuereinrichtung 70 abhängig von erfassten Wärmebilddaten der Wärmebildkamera 80 die Bewegung und die Arbeitsphasen des Auftragsroboters 30 und des Zerspanungsroboters 40.

Sowohl der Auftragsroboter 30 als auch der Zerspanungsroboter 40 sind jeweils mehrachsbasiert, sodass Auftragsroboter 30 und Zerspanungsroboter 40 jeweils ihre eigenen aktuellen Arbeitsbereiche A, B aufweisen, in welchem sie grundsätzlich arbeiten könnten.

Alternativ kann anstatt mit einem Auftragsroboter 30 und einem Zerspanungsroboter 40 stattdessen mit einem Roboter mit einem einzigen Bearbeitungsprozesskopf erfindungsgemäß gefertigt werden. Dazu wird ein Bearbeitungsprozesskopf herangezogen, der sowohl zerspanende als auch additive Fertigungsfähigkeiten aufweist. Die Bewegung des Bearbeitungskopfs wird mittels eines CAD/CAM-Tools sowohl für die Phase der additiven Fertigung als auch für die Phase der subtraktiven Bearbeitung abgestimmt, sodass additiv angeordneter Werkstoff subtraktiv bearbeitet werden kann, bevor der erweichte Werkstoff erstarrt.

## Patentansprüche

1. Verfahren zur additiven Fertigung, bei welchem in einem Verfahrensschritt ein erweichter Werkstoff (20) herangezogen und additiv angeordnet wird und der additiv angeordnete Werkstoff (20) subtraktiv bearbeitet wird, bevor der erweichte Werkstoff (20) zur Erstarrung gelangt.

2. Verfahren nach dem vorhergehenden Anspruch, bei welchem der erweichte Werkstoff (20) zur Erstarrung gelangt, indem der Werkstoff (20) abkühlt wird.

3. Verfahren nach einem der vorhergehenden Ansprüche, bei welchem der erweichte Werkstoff (20) zur Erstarrung gelangt, indem eine Komponente des Werkstoffs (20) evaporiert wird.

4. Verfahren nach einem der vorhergehenden Ansprüche, bei welchem der Verfahrensschritt ein- oder mehrfach wiederholt wird.

5. Verfahren nach einem der vorhergehenden Ansprüche, bei welchem der Werkstoff (20) mittels Laserauftragsschweißens und/oder mittels Draht- und/oder Lichtbogenschweißens und/oder robotergeführt und/oder mehrachsbasiert additiv angeordnet wird.

6. Verfahren nach einem der vorhergehenden Ansprüche, bei welchem mittels eines ersten Roboters (30) additiv angeordnet und mittels des ersten Roboters (30) oder mittels eines zweiten Roboters (40) subtraktiv bearbeitet wird.

7. Verfahren nach einem der vorhergehenden Ansprüche, bei welchem mittels eines einzigen Bearbeitungskopfes additiv angeordnet und subtraktiv bearbeitet wird.

8. Verfahren nach einem der vorhergehenden Ansprüche, bei welchem eine Bahn des Bearbeitungskopfes mit einem CAD/CAM-Tool festgelegt wird.

9. Verfahren nach einem der vorhergehenden Ansprüche, bei welchem eine Temperatur des additiv angeordneten Werkstoffs (20) erfasst wird.

10. Fertigungsanlage zur Ausführung eines Verfahrens nach einem der vorhergehenden Ansprüche, welche ausgebildet ist, in einer Abfolge von Verfahrensschritten einen erweichten Werkstoff (20), insbesondere mittels eines ersten Roboters (30) der Fertigungsanlage (10) additiv anzuordnen und den additiv angeordneten Werkstoff subtraktiv, insbesondere mittels eines zweiten Roboters (40) der Fertigungsanlage, zu bearbeiten, bevor der erweichte Werkstoff (20) zur Erstarrung gelangt.
